# EUROPEAN PATENT APPLICATION

(11) **EP 2 028 767 A2**
(43) Date of publication of application: **25.02.2009**
(21) Application number: 08014694.7
(22) Date of filing: 19.08.2008
(51) Int. Cl.: H04B 1/38

(54) **High noise immunity emergency responder communication system**

(30) Priority: 21.08.2007 US 842286
(71) Applicant: Ultra Electronics Audiopack, Inc., Garfield Heights OH 44128 (US)
(72) Inventor: Wilbur, Mark, Concord, Ohio 44077 (US); Livingston, Robert, Jr., Cleveland, Ohio 44102 (US); Murphy, Rawn, Beachwood, Ohio 44122 (US); Claypoole, Gary, L., West Chester, Ohio 45069 (US)
(74) Representative: Schumacher, Horst

(57) **Abstract**

High noise immunity communication systems are provided for voice communications among emergency responders, in which first and second wireless devices employ near field spread spectrum data modems to transfer digital audio data between a responder mask or helmet and a secondary device affixed to the responder's clothing or uniform to allow the responder to broadcast messages to other responders and to hear broadcasts from other responders.

## Description

### FIELD OF THE INVENTION

This invention relates generally to the field of emergency response equipment, and more particularly to emergency responder communications equipment.

### BACKGROUND OF THE INVENTION

Safety personnel such as police, firemen, hazardous waste disposal personnel, and other emergency responders are often called upon to deal with emergency situations in which protective gear must be worn, and wherein communication and coordination among the responders is essential to successful team performance while minimizing dangers to team members. Masks and/or helmets are often worn by such emergency responders, to prevent burns or exposure to other hazards and to enable breathing of fresh air or gases such as oxygen. Due to the nature of certain protective gear such as clothing, uniforms, masks and/or helmets, and because many emergency situations involve loud ambient noise, unassisted vocal communication between response team members may be difficult or impossible. Accordingly, safety personnel often carry walkie talkies or other radios, and masks or helmets have been developed which include a communication system, such as a voice amplification system or a radio interface system. Some of these systems use microphones and amplifiers to help the user to be heard clearly outside the user's mask, either directly at the location or remotely via a radio frequency connection. However, current systems may suffer from intermittent communication caused by damaged or degraded wires or cables, and are subject to communications loss resulting from electromagnetic interference (EMI) and radio frequency interference (RFI). Thus, there remains a need for improved communications system for emergency responder voice communications with high noise immunity which can operate with high reliability in emergency situations.

### SUMMARY OF THE INVENTION

The problem mentioned here before is solved by a communications system and device as claimed in claim1. Favorable embodiments are claimed in the sub claims and in particular in claims 2. 3, 10 and 11. The following is a summary of one or more aspects of the invention to facilitate a basic understanding thereof, wherein this summary is not an extensive overview of the invention, and is intended neither to identify certain elements of the invention, nor to delineate the scope of the invention. Rather, the primary purpose of the summary is to present some concepts of the invention in a simplified form prior to the more detailed description that is presented hereinafter. The various aspects of the present disclosure relate to equipment for high noise immunity communication between emergency responders, in which near field spread spectrum devices are provided with low data rate data modems to communicate from a responder's mask to a second device to avoid or mitigate the adverse effects of EMI/RFI while ensuring reliable low power operation and without interfering with the activities of the emergency responders.

In accordance with one or more aspects of the present invention, a high noise immunity communications system is provided for emergency responder voice communications, including a mask or helmet mounted first device and a lapel or waist mounted second device communicating with one another via a spread spectrum near field wireless link for transfer of digitized speech data. The emergency responder talks into a microphone and listens to a speaker of the first device while wearing a mask or helmet. The second device communicates with the mask/helmet device and with a walkie talkie or directly with lapel/waist mounted units of one or more different emergency responders. In this manner, the emergency responders can communicate with one another sing broadcast messages between walkie talkies or lapel/waist mounted units, while using a reliable near field link for transferring digital audio data to and from the mask/helmet device. This usage of spread spectrum data modems between the mask/helmet and the lapel/waist devices eliminates the need for cables which can break or become worn, while providing a high degree of immunity to EMI/RFI, wherein low data transfer rates can be employed in certain near field embodiments to provide low power operation particularly advantageous in emergency responder applications. The mask to lapel link, moreover, preferably provides for error detection and coordinated changeover to a new spreading code to avoid channels that become noisy.

The communications system includes a mask or helmet mounted first spread spectrum emergency responder communications device (SSERCD) equipped with a microphone into which the responder talks, an analog to digital (A/D) converter that converts the outgoing audio to digital audio data, and a processor which packetizes the outgoing digital audio data. A near field spread spectrum data modem modulates and transmits outgoing digital audio data packets and receives and demodulates incoming digital audio data packets according to a spreading code from the processor. The processor assembles incoming digital audio data packets, which are then converted into an incoming analog audio signal provided to a speaker in the helmet or mask to provide an audible output to the emergency responder.

The second SSERCD mounted in or on clothing or a uniform worn by the emergency responder, which includes a first push-to-talk (PTT) button, and a second near field spread spectrum data modem operative according to at least one spreading code to modulate and transmit digital audio data packets to the mask/helmet mounted first SSERCD and to receive and demodulate digital audio data packets received from the first SSERDC. A processor in the second SSERCD packetizes the digital audio data for transmission and assembles received digital audio data packets, and operates to packetize and transmit assembled digital audio data packets to a near field spread spectrum data modem not associated with the emergency responder via the data modem when the first PTT button is activated. The second SSERCD in certain embodiments may further comprise an audio interface to send and receive analog audio signals to a separate communications device, such as a walkie talkie, via a cable, as well as a second PTT button. This allows the responder to press the first PTT button to talk to other responders using the lapel to lapel link, or to press the second PTT button to talk via the walkie talkie, whereas the responder can listen to communications from either link when neither PTT button is pressed.

In certain embodiments, moreover, the processor systems of the helmet/mask and waist/lapel devices each provide data compression to compress converted digital audio data prior to transmission, as well as data decompression to decompress received digital audio data. In addition, frequency channel agility may be advantageously provided by the processor systems in implementing spread spectrum channel hopping, wherein the processors cooperatively switch to a new selected spreading code when a transmission problem is detected.

### BRIEF DESCRIPTION OF THE DRAWINGS

The following description and drawings set forth in detail certain illustrative implementations of the invention, which are indicative of several exemplary ways in which the principles of the invention may be carried out. Various objects, advantages, and novel features of the invention will become apparent from the following detailed description of the invention when considered in conjunction with the drawings, in which:

Fig. 1 is a simplified perspective view illustrating an exemplary high noise immunity communications system for emergency responder voice communications including a helmet or mask mounted first spread spectrum emergency responder communications device (SSERCD) and a lapel mounted second SSERCD in accordance with one or more aspects of the present invention;

Figs. 2A-2C are simplified front elevation views showing an emergency responder equipped with various possible configurations of the exemplary high noise immunity communications system;

Fig. 3A is a simplified schematic diagram illustrating details of an exemplary embodiment of a helmet or mask mounted first SSERCD in accordance with further aspects of the invention;

Fig. 3B is a simplified schematic diagram illustrating details of an exemplary clothing or uniform mounted second SSERCD in accordance with still further aspects of the invention;

Fig. 4A is a flow diagram illustrating exemplary operation of the mask and lapel mounted SSERCDs in the communications system of Figs. 1-2C;

Fig. 4B is a flow diagram illustrating frequency agility operation of the SSERCDs in the communications system of Figs. 1-2C;

Figs. 5A-5D are front and side elevation views illustrating further details of an exemplary uniform mounted second SSERCD in accordance with the invention;

Fig. 6 is a schematic diagram illustrating interactive communication between two emergency responder communications systems (ERCSSs) in accordance with further aspects of the invention.

### DETAILED DESCRIPTION OF THE INVENTION

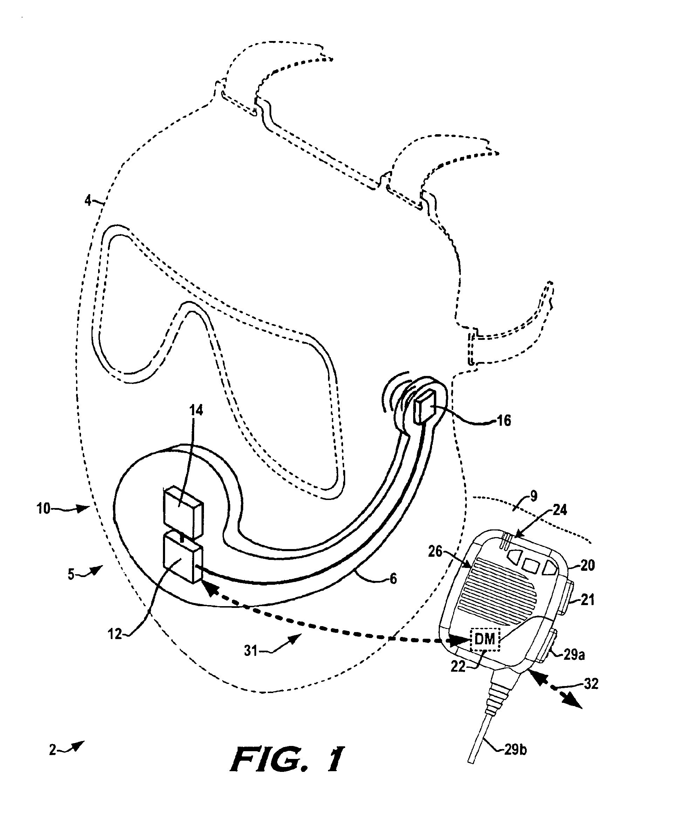

Referring now to the figures, several embodiments or implementations of the various aspects of the present disclosure are hereinafter illustrated and described in conjunction with the drawings, wherein like reference numerals are used to refer to like elements. Fig. 1 depicts an exemplary high noise immunity communications 2 system for emergency responder voice communications in accordance with one or more aspects of the present invention, including a helmet or mask mounted first spread spectrum emergency responder communications device (SSERCD) 10 and a lapel mounted second SSERCD 20 that communicate with one another via a near field spread spectrum link 31.

The first SSERCD 10 is provided as a mountable assembly 5 affixed to a mask 4 (or alternatively in or on a helmet, not shown) in any suitable manner, such as mounting to a voice emitter portion or on a filter or oxygen inlet portion of the mask 4. The communications assembly 5 includes a housing 6, which may be any suitable structure that does not inhibit free movement and field of vision of the emergency responder wearing the mask 4, and may preferably be comprised of one or more molded plastic pieces mountable to the mask or helmet 4 for operatively supporting the components of the SSERCD 10. The device 10 includes a microphone 14 located in the assembly 5 to receive audible speech from the responder, where the microphone 14 can be any suitable component that receives audible sound and generates a corresponding analog speech signal. The SSERCD 10 further includes a transceiver including a near field data modem 12 operatively coupled to the microphone 14, which preferably provides for low data rate operation powered by a battery (not shown).

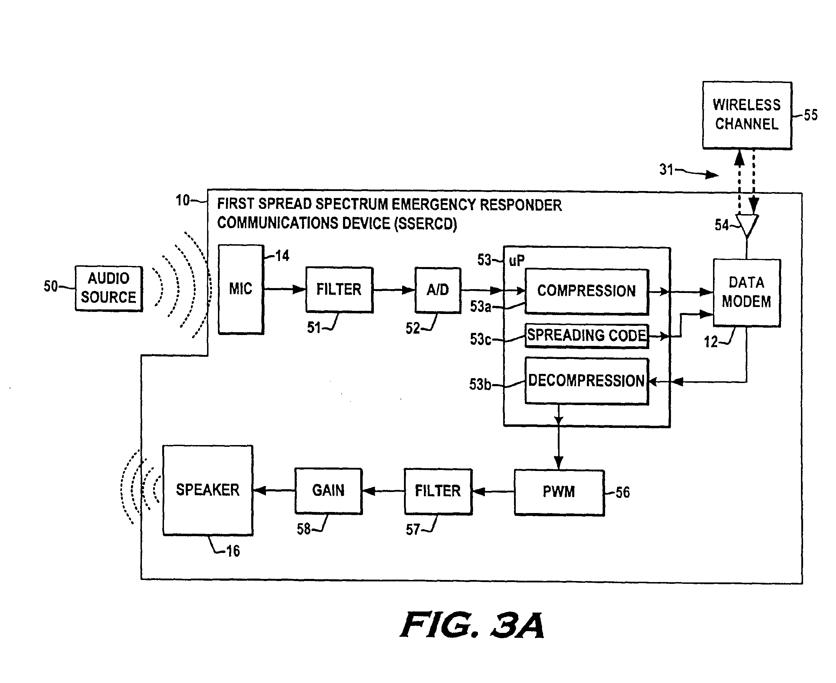

The transceiver 12 in one embodiment is an encased electronic circuit including a microprocessor, analog and digital circuitry as illustrated and described further below with respect to Fig. 3A, where the transceiver 12 receives the analog audio signal from the microphone 14 for conversion and spread spectrum transmission in the form of digital audio data. The device 10 further includes a speaker 16, which can be any device that operates to provide audible sound to the responder according to an analog or digital audio signal provided by the transceiver 12. In the illustrated example, the speaker 16 is located in an extended portion of the housing 6 near one ear of the responder and the microphone 14 is located near the responder's mouth. However, alternate embodiments are possible in which the speaker 16 and/or the microphone 14 are located in other positions, wherein suitable sound chambers or cavities or other means can be provided in the housing so as to allow the microphone 14 to receive audible speech from the responder and to allow the responder to hear the output of the speaker 16.

As further shown in Fig. 1, the system 2 includes a second SSERCD 20 mounted to a lapel 9 of the responder's uniform. The second SSERCD 20 may be mountable to any suitable location of the uniform or clothing, and is preferably externally accessible by the responder to allow adjustment of volume, channel, and other controls, as well as for selective actuation of push-to-talk (PTT) buttons as described in greater detail *infra.* The exemplary lapel mounted SSERCD 20 includes first and second PTT buttons 21 and 29a, respectively, together with a data modem transceiver 22. The lapel device 20, moreover, may optionally include a microphone 24 and a speaker 26, where the speaker 26 may operate to amplify the responder's voice for speaking through the digital link 31 to persons proximate the responder.

The transceiver data modem 22 communicates with the first SSERCD 10 via the near field spread spectrum link 31 according to a spreading code, and also communicates via a different channel or set of channels to other wireless devices via a second link 32, where the second communications link 32 may use a single channel, or may also employ spread spectrum techniques to utilize channel hopping. The second SSERCED 20, moreover, may provide analog audio to a walkie talkie or other device via an audio cable 29b. In one implementation, the first PTT button 21 is depressed by the responder to broadcast to other responders via the link 32, or may alternatively depress the second PTT button 29a to broadcast speech using a walkie talkie connected to the cable 29b. When neither button 21, 29a is activated, the responder can listen to incoming communications from either link 32 or from the cable 29b. In this manner, the speech from the responder may be transmitter to similar device 20 associated with other responders, and the responder can listen to fellow emergency team members while performing emergency services.

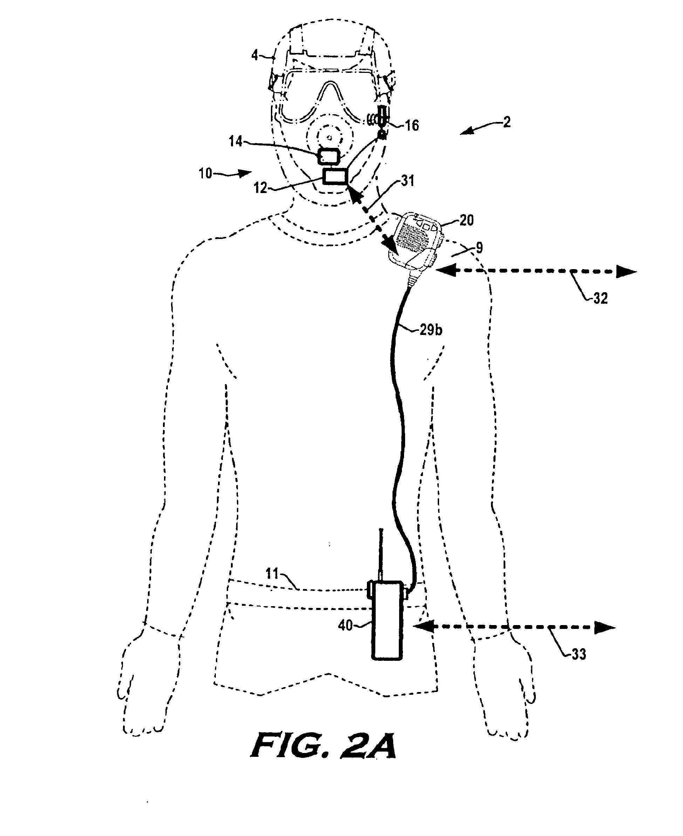

Referring also to Figs. 2A-2C, an emergency responder is shown equipped with various possible configurations of the exemplary high noise immunity communications system 2 for communicating with other responders in accordance with present invention. As shown in Fig. 2A, in one embodiment, the second SSERCD is equipped with an analog audio interface connected to the cable 29b, which in turn is connected to a walkie talkie 40 mounted to the responder's belt 11. In this configuration, the responder can activate the second PTT button to transmit broadcasts from the second SSERCD 20 to others in communication with the walkie talkie 40 via a separate wireless link 33. Also, the responder will hear any broadcasts sent to the walkie talkie 40. In addition, the configuration of Fig. 2A allows the responder to hear broadcasts sent via the link 32 to the second SSERCD 20, and the responder may activate the first PTT button on the device 20 to talk to others via the link 32. As with the other implementations, the spread spectrum link 31 transfers digital audio data between the devices 10 and 20 in a high noise immune fashion.

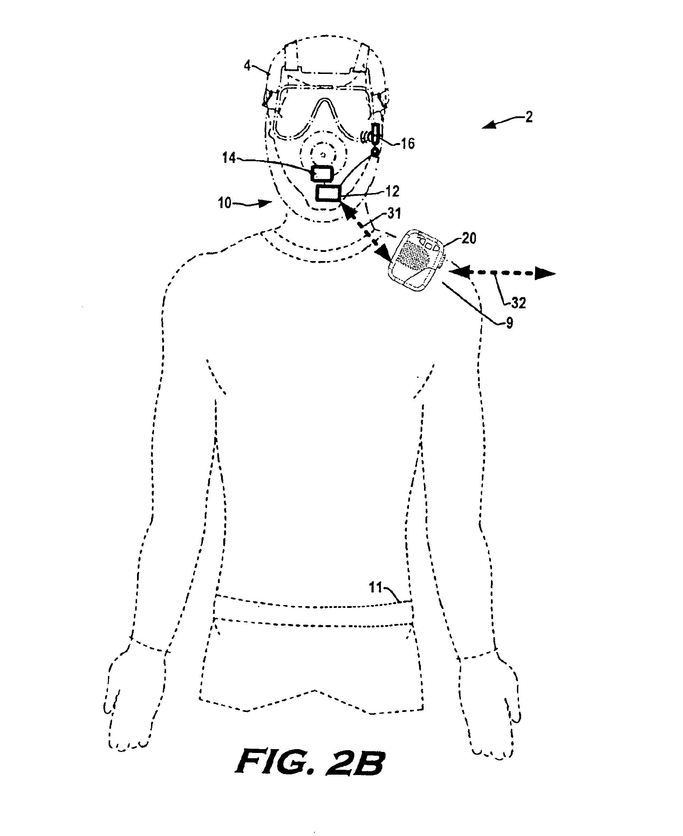

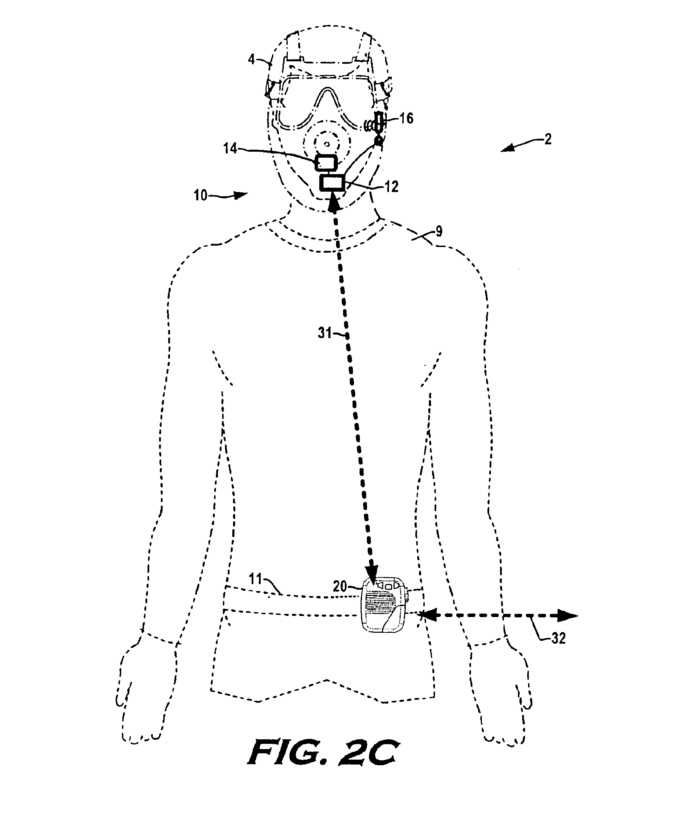

Another possible configuration is shown in Fig. 2B, in which the second SSERCD 20 is mounted to the uniform lapel 9, but the device 20 does not include the analog audio cable attachment. In this implementation, the device 20 includes a single PTT button by which the responder can talk to others having similar communications systems 2 via the wireless link 32, with the responder hearing broadcasts received by the device 20 from the link 32. Fig. 2C shows an alternate configuration, in which the responder mounts the second SSERCD 20 to the uniform belt 11 instead of the lapel 9, wherein digital audio data is transferred between the devices 10 and 20 in a high noise immune fashion via the spread spectrum link 31.

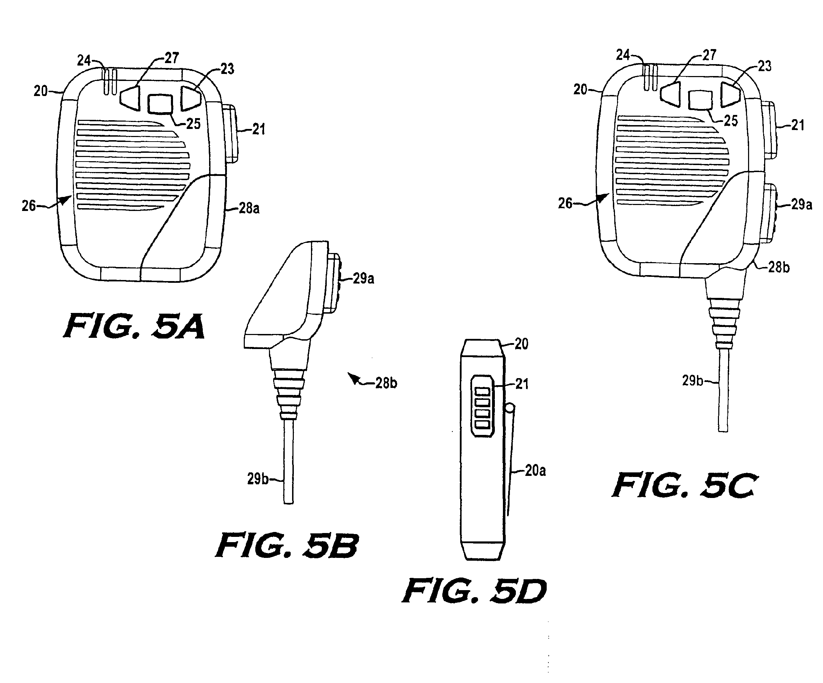

Figs. 5A-5D illustrate further details of an exemplary uniform mounted second SSERCD 20 in accordance with the invention, wherein Figs. 5A and 5D show the embodiment in which no external audio cable is provided (e.g., as in Figs. 2B and 2B above), in which a cover plate 28a is installed on the housing of the device 20. In this situation, the SSERCD 20 includes a single PTT button 21, along with external microphone 24 and speaker 26. In addition, the exemplary device 20 provides a button 23 for manual channel selection, a button 25 for turning the power on and off, and a volume adjustment button 27. As shown in Fig. 5D, moreover, the device 20 includes a spring loaded alligator type clip 20a or other means by which the SSERCD 20 can be securely fastened to an emergency responder's uniform or clothing. Fig. 5B shows an optional cable assembly 28b which can be fitted to the device housing as shown in Fig. 5C, to provide a second PTT button 29a and an attached audio cable 29b for connection to an external device such as the walkie talkie 40 in Fig. 2C above.

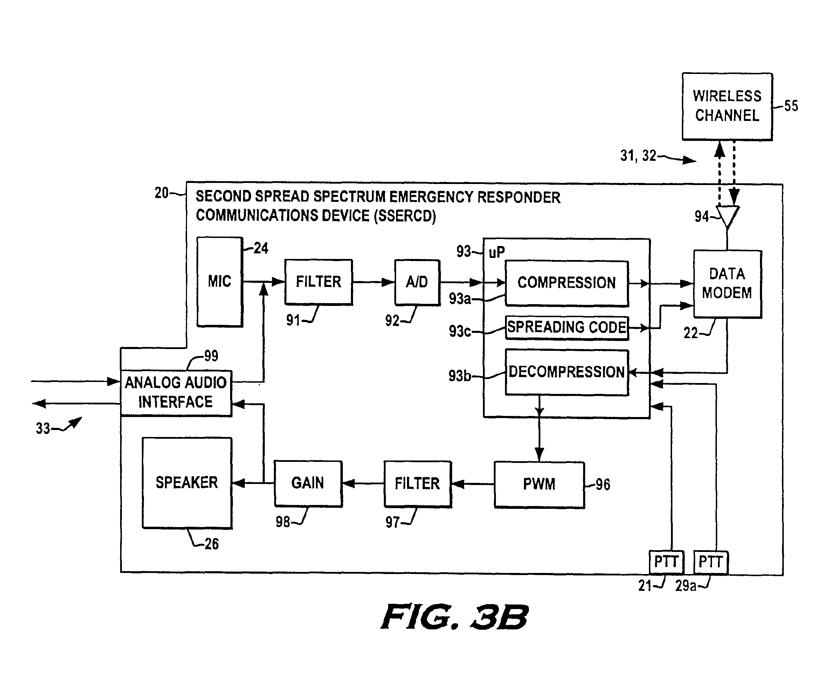

Referring now to Figs. 3A and 3B, further details of the SSERCDs 10 and 20 are presented schematically in Figs. 3A and 3B, respectively. An exemplary first SSERCD 10 is shown in Fig. 3A, which is preferably mounted on or in a mask or helmet work by emergency response personnel. The device 10 includes a microphone 14 to receive an audible input from the emergency responder and to provide an outgoing analog audio signal, as well as a transmission circuit including a filter network 51 and an analog to digital (A/D) converter 52 receiving the outgoing analog audio signal from the microphone 14 and providing outgoing digital audio data to a processor system 53. The processor 53 packetizes the outgoing digital audio data and provides this to the spread spectrum data modem transceiver 12 for transmission according to a selected spreading code 53c via an antenna 54 to a wireless channel or medium 55 along the link 31, where the antenna 54 is preferably internal to the transceiver 12 but may optionally be external.

The data modem 12 also receives incoming digital audio data packets from the link 31, which are assembled by the processor 53, where the data modem 12 modulates and transmits the outgoing digital audio data packets and also receives and demodulates the incoming digital audio data packets according to the spreading code 53c from the processor system 53. The device 20 further includes a conversion circuit including a PWM circuit 56 that pulse width modulates the assembled digital audio data, a filter circuit 57 that filters the pulse width modulated audio data, and an amplifier circuit 58 that amplifies the filtered audio data to provide an analog audio signal., as well as a speaker 16 that receives the incoming analog audio signal and provides an audible output to the emergency responder. The exemplary device 20 also provides for data compression, so that 20 ms of speech can be transmitted/received in a data transmission time slot of 12.5 ms, whereby allowing transfer of audio data as well as control information between the first and second SSERCDs 10 and 20. In this embodiment, the processor system 53 provides data compression 53a to compress converted digital audio data prior to transmission and further provides data decompression 53b to decompress received digital audio data.

Fig. 3B illustrates one possible implementation of the clothing or uniform mounted second SSERCD 20, including an audio interface 99 operative to send and receive analog audio signals to a separate communications device via a cable 29b (Figs. 1 and 2A above) to provide another communications link 33, as well as first and second PTT buttons 21 and 29a providing talk signals when activated by the emergency responder. The device 20 further comprises a near field spread spectrum data modem 22 operative according to at least one spreading code 93c to modulate and transmit digital audio data packets and to receive and demodulate digital audio data packets via an internal or external antenna 94 and the channel 55 to implement two separate data links 31 and 32, with the first link 31 preferably providing spread spectrum channel hopping data transfer to and from the mask/helmet mounted device 10, and the second link 32 providing communications with other lapel/belt mounted devices 20 associated with other emergency responders. The device includes a processor system 93 operatively coupled to receive the talk signals from the PTT buttons 21 and 29a, and is operatively coupled with the data modem 22 to packetize the digital audio data for transmission by the data modem 22 and to assemble digital audio data packets received by the data modem 22. In particular, the processor system 93 packetizes and transmits assembled digital audio data packets via the second link 32 via the data modem 22 when the first PTT button 21 is activated.

The second SSERCD 20 may also include a microphone 24, and provides an input analog filter circuit 91 and A/D converter 92 operative to convert an analog audio signal received at the audio interface 99 or from the microphone 24 to digital audio data. The processor 93 packetizes the digital audio data from the A/D converter 92 for transmission via the data modem 22 when neither of the PTT buttons 21, 29a are activated, so that the responder can hear broadcasts received at the interface 99 (e.g., from a walkie talkie 40 as shown in Fig. 2A) or can hear broadcasts received digitally from the second link 32. The device 20 also includes a conversion circuitry with a PWM circuit 96 that pulse width modulates the assembled digital audio data, a filter circuit 97 that filters the pulse width modulated audio data, and an amplifier circuit 98 that amplifies the filtered audio data to provide an analog audio signal. The audio signal is provided to the analog interface 99 for transfer to the walkie talkie 40 and eventual transmission on the third link 33, and may also be provided to an optional speaker 26 to provide an audible output proximate the responder. In the exemplary implementation, moreover, the processor 93 provides data compression 93a to compress converted digital audio data prior to transmission, as well as data decompression 93b to decompress received digital audio data.

In a preferred embodiment, the processor systems 53, 93 of the SSERCDs 10 and 20 in Figs. 3A and 3B cooperatively implement spread spectrum channel hopping to coordinate the transfer of data packets between the respective first and second data modems 12, 22 according to a selected one of a plurality of spreading codes 53c, 93c, where each spreading code defines a unique set of frequency channels through which data packets are transferred. In one implementation, several spreading codes are defined, each of which defines a unique sequence of 74 frequency channels through which both devices 10 and 20 will transition or 'hop' over time. In this manner, a wide frequency spectrum is used for transfer of the digital audio data and associated control data between the devices 10 and 20, so as to reduce the likelihood of noise bursts on a particular frequency or channel significantly degrading the audio link 31 between the responder's mask/helmet unit 10 and the uniform/clothing mounted unit 20. Thus, the use of spread spectrum techniques according to a selected spreading code facilitates the provision of high noise immunity in the system 2. In preferred embodiments, moreover, the data modems 12, 22 are operated at low data rates, such as in the 100 kbits/second range, and transmit at low power levels to provide near field operation (e.g., range of about 200 feet) so as to conserve power for extended battery operation of the SSERCDs 10, 20.

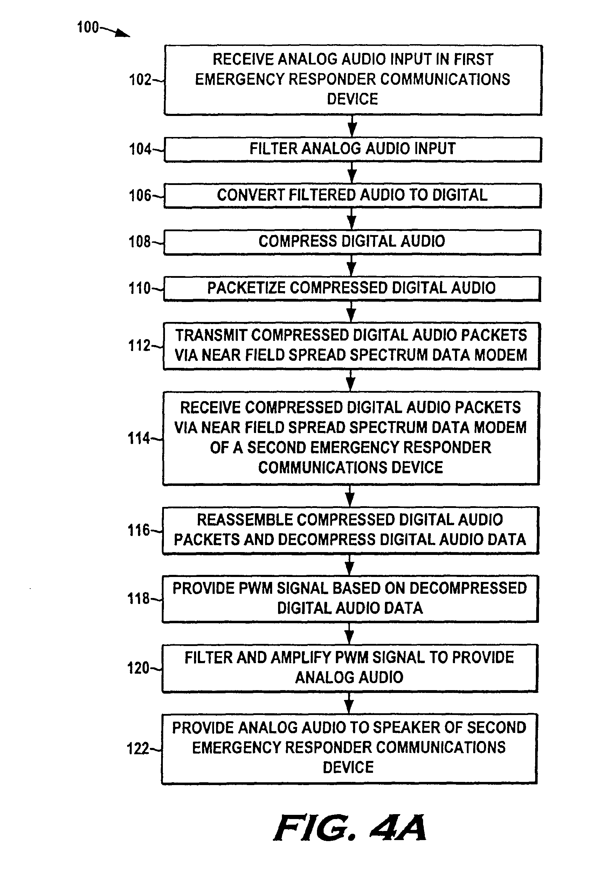

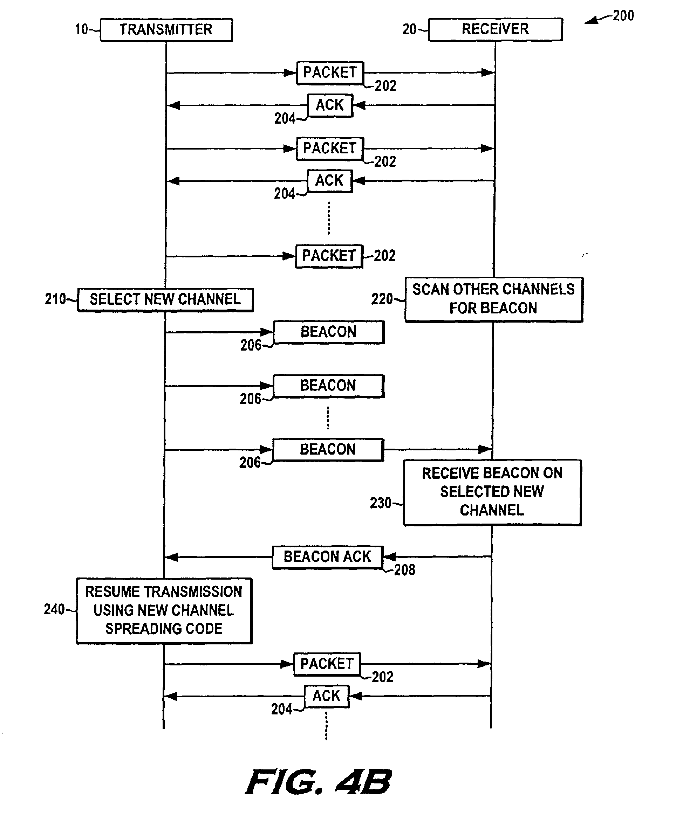

Referring now to Figs. 4A and 4B, a flow diagram 100 of Fig. 4A depicts exemplary operation of the devices 10 and 20 and flow diagram 200 in Fig. 4B illustrates frequency agility operation of the SSERCDs 10, 20 in the communications system 2. In operation of the first data link 31 between the devices 10 and 20, at any given time one of the data modems 12, 22 operates as a transmitter and the other operates as a receiver, with the transmitter sending a packet to the receiver and the receiver sending an acknowledgement when the packet is received, with spread spectrum techniques being used to spread the transmit energy across a wide band of 74 frequency channels to mitigate noise susceptibility. The data modems 12, 22 operate in this fashion with the transmitter spreading the energy across 74 channels, and the receiver re-aggregating the received packets such that the signal as a whole is less likely to be greatly disturbed by bursts of interference at a given frequency channel (higher immunity). Moreover, the transmitted signal as a whole is below the noise floor, and therefore the device does not itself cause excessive noise with respect to other transmissions occurring in an emergency operating environment. In operation, the transmitting processor 53, 93 provides the spreading code 53c, 93c to the data modem 12, 22, where the receiver tracks with the same spreading code with the processors 53, 93 sharing a unique spreading code so that they both know the frequency hopping sequence.

Fig. 4A depicts an exemplary sequence of transmitter and receiver operation, which is described in the context of the responder talking into the microphone 14 (with either of the PTT buttons 21, 29a depressed) to cause transmission of audio data packets across the first link 31 from the first SSERCD 10 to the second SSERCD 20, where the flow diagram 100 is similarly representative of the case where the second SSERCD 20 receives broadcast audio from either the second or third links 32 or 33, and transmits digital audio data to the mask/helmet mounted device 10 via the link 31. At 102, the transmitter receives an analog audio from the microphone of the first SSERCD 10, which analog signal is then filtered at 104 (e.g., via the filter network 512 in Fig. 3A), and converted at 106 to digital (e.g., via the A/D converter 52). At 108, the digital audio data is optionally compressed by the processor 53, which packetizes the compressed digital audio at 110. At 112, the compressed data is transmitted via the near field spread spectrum data modem 12 according to the spreading code 53c provided by the processor 53. At 114, the receiver (e.g., the second SSERCD 20 of Fig. 3B in this example) receives the compressed digital audio data packets via the data modem 22. The processor 93 of the second SSERCD 20 reassembles and decompresses the received digital data packets at 116 and provides a PWM signal at 118 (PWM component 96 in Fig. 3B) corresponding to the decompressed reassembled audio data. The PWM signal is then filtered (e.g., via filter network 97) and amplified (gain circuit 98) at 120, and the resulting analog audio signal is sent to the speaker 26 of the second SSERCD 20 and/or is provided to a WALKIE TALKIE 40 (Fig. 2A) via the analog audio interface 99 and an audio cable 29b.

Fig. 4B illustrates the synchronized control of the receiver and transmitter processors WRT spreading code and selected frequencies in accordance with further aspects of the invention, in order to provide frequency/channel agility for the link 31 between the mask/helmet device 10 and the lapel/waist device 20. In this aspect of the invention, the processor systems 53 and 93 cooperatively switch to a new selected spreading code (spreading channel) when a transmission problem is detected. As shown in the diagram 200 of Fig. 4B, the transmitter (whether the first SSERCD 10 or the second device 20) sends a data packet 202, and if received successfully by the receiver 20, an acknowledgement 204 is sent back to the transmitter 10.

This process continues with data and acknowledgment packets 202 and 204 being exchanged in interleaved fashion (e.g., including data compression for the audio data packets 202, and the spread spectrum frequency/channel hopping) until a noise burst occurs, causing non-reception or incorrect reception of a packet from the transmitter 10. In the illustrated embodiment, the receiver 20 can detect a non-received packet by lack of data on the link 31 in a given time slot, or can detect garbled packet reception by use of check sums or CRC (cyclic redundancy codes) or other means embedded in the packets 202, by which the receiver 20 determines that the received packet bits do not correspond to what the transmitter 10 sent. At this point, the receiver will not send an acknowledgment. As a result, the transmitter 10 selects a new channel (or a new spreading code 53c) at 210, and the receiver begins scanning a list of predetermined channels (or channels corresponding to a predetermined list of spreading codes) at 220. The transmitter 10 sends beacon signals 206 (e.g., a predefined digital signature recognizable by the receiver 20) on the selected channel/spreading code. Once the receiver 20 receives the valid beacon 206 on the selected new channel at 230, it acknowledges the beacon at 208. Thereafter, the transmitter 10 receives the beacon acknowledgment 208 and resumes transmission at 240 of audio data packets 202 using the new channel spreading code, and the receiver 20 sends acknowledgments 204. In the exemplary implementation, this error recovery, frequency agility process takes about 20 ms, and is thus indiscernible by the emergency responder.

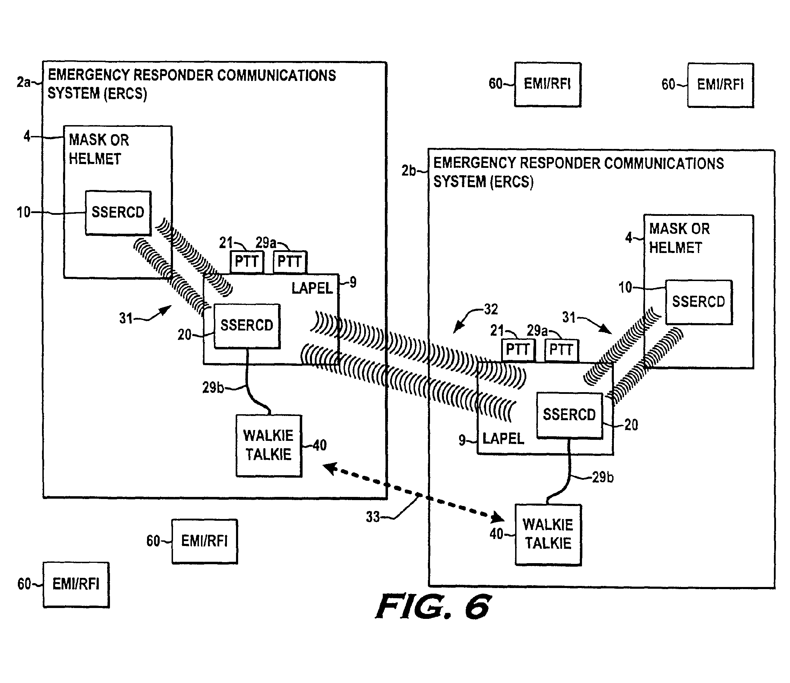

Fig. 6 illustrates interactive communication between two emergency responder communications systems (ERCSSs) 2a and 2b in accordance with the invention. As shown in Fig. 6, a first responder is equipped with a first communications system 2a including a first SSERCD 20 mounted to the responder's mask or helmet 4, as well as a second SSERCD 20 mounted to the lapel 9, waist belt 11, or other location on the responder's clothing or uniform, as well as a walkie talkie 40 operatively connected to the second SSERCD 20 via the cable 29b. The second responder is similarly equipped, having first and second SSERCDs 10, 20 and a walkie talkie 40. In the context of an emergency situation, the responders are part of a team and as such need to communicate with one another, where many emergency sites include a variety of EMI/RFI noise sources 60, such as other responder communications devices, cell phones, radios, computers, machinery, etc. In this situation, the emergency response communications systems 2 and the devices 10, 20 thereof provide for highly noise immune communications links 31 between the mask devices 10 and the corresponding lapel mounted devices 20, where the second devices 20 can also communication with one another via a second RF (digital) link 32. In addition, the devices 20 can provide analog audio signaling from the responders to the walkie talkies 40 for transmission of broadcasts through the walkie talkie link 33. Thus, the system provides a robust solution to the emergency communications requirements with high noise immunity resulting from the use of spread spectrum frequency hopping, frequency agility by virtue of the error detection and channel switching capabilities of the devices 10, 20, and low power near field operation allowing use of batteries to power the devices 10, 20.

Although the invention has been illustrated and described with respect to one or more exemplary implementations or embodiments, equivalent alterations and modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component which performs the specified function of the described component (*i*.*e*., that is functionally equivalent), even though not structurally equivalent to the disclosed structure which performs the function in the herein illustrated exemplary implementations of the invention. In addition, although a particular feature of the invention may have been disclosed with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising".

### Reference numbers:

- 2: high noise immunity communication system
- 2a: communication system
- 4: mask
- 5: assembly
- 6: housing
- 9: lapel
- 10: first SSERCD
- 11: waist belt
- 12: data modem transceiver
- 14: microphone
- 16: speaker
- 20: second SSERCD
- 21: first PTT button
- 22: data modem transceiver
- 24: microphone
- 26: speaker
- 27: adjustment button
- 28a: cover plate
- 28b: cable assembly
- 29a: second PTT button
- 29b: audio cable
- 31: spectrum link
- 32: second link
- 33: wireless link
- 40: walkie talkie
- 51: filter network
- 52: A/D converter
- 53: processor system
- 53c: spreading code
- 54: antenna
- 55: medium
- 56: PWM circuit
- 57: filter circuit
- 58: amplifier circuit
- 60: noise source
- 91: filter circuit
- 92: A/D converter
- 93: processor system
- 93a: data compression
- 93c: spreading code
- 94: external antenna
- 96: PWM component
- 97: filter network
- 98: gain circuit
- 99: audio interface
- 100: flow diagramm
- 200: diagramm
- 202: acknowledgement packet
- 204: acknowledgement packet
- 206: beacon signal
- 208: beacon acknowledgment
- 230: channel

## Claims

1. A communications device or system for emergency responder voice communications, comprising:
a first spread spectrum emergency responder communications device (SSERCD) mounted in or on a mask or helmet wornable by an emergency responder, the first SSERCD comprising:
a microphone to receive an audible input from the emergency responder and
to provide an outgoing analog audio signal,
an analog to digital (A/D) converter receiving the outgoing analog audio signal and providing outgoing digital audio data,
a processor system packetizing the outgoing digital audio data and assembling incoming digital audio data packets,
a near field spread spectrum data modem modulating and transmitting outgoing digital audio data packets and receiving and demodulating incoming digital audio data packets according to a spreading code from the processor system,
a conversion circuit for converting incoming digital audio data to provide an incoming analog audio signal, and
a speaker to receive the incoming analog audio signal and provide an audible output to the emergency responder.

2. The communications device or system of claim 1, further comprising a second SSERCD mounted in or on clothing or a uniform wornable by the emergency responder, the second SSERCD comprising:
a first push-to-talk (PTT) button providing a first talk signal when activated by the emergency responder,
a second near field spread spectrum data modem operative according to at least one spreading code to modulate and transmit digital audio data packets to the first SSERCD and to receive and demodulate digital audio data packets received from the first SSERDC, and
a second processor system operatively coupled with the first PTT button to receive the first talk signal and with the second data modem to packetize the digital audio data for transmission by the second data modem and to assemble digital audio data packets received by the second data modem, the second processor system operative to packetize and transmit assembled digital audio data packets to a near field spread spectrum data modem not associated with the emergency responder via the second data modem when the first PTT button is activated.

3. The communications system of claim 2, being a high noise immunity communications system

4. The communications device or system of any one of claims 2 or 3, wherein the second SSERCD further comprises:
an audio interface operative to send and receive analog audio signals to a separate communications device via a cable;
a second PTT button providing a second talk signal to the second processor system when activated by the emergency responder,
a second A/D converter converting an analog audio signal received at the audio interface to digital audio data, wherein the second processor system is operative to packetize the digital audio data from the second A/D converter for transmission to the first SSERCD via the second data modem when neither of the PTT buttons are activated; and
a second conversion circuit converting assembled digital audio data from the second processor system providing an analog audio signal to the audio interface when the second PTT button is activated.

5. The communications device or system of claim 4, wherein the second SSERCD further comprises:
a second microphone operative to receive an audible input and to provide an analog audio signal to the second A/D converter for transmission to the first SSERCD via the second data modem; and
a second speaker operative to receive the analog audio signal from the second conversion circuit and to provide an audible output.

6. The communications device or system of any one of claims 2-5, wherein the at least one processor systems implements spread spectrum channel hopping to coordinate the transfer of data packets between the respective first and second data modems according to a selected one of a plurality of spreading codes, each spreading code defining a unique set of frequency channels through which data packets are transferred, and wherein the first and second processor systems cooperatively switch to a new selected spreading code when a transmission problem is detected.

7. The communications device or system of any one of claims 2-6:
wherein one of the data modems operates as a transmitter and the other one of the data modems operates as a receiver at any given time with the transmitter sending a packet to the receiver and the receiver sending an acknowledgement when the packet is received,
wherein if an acknowledgement is not received, the transmitter suspends data packet transmission, selects a new spreading code, sends a beacon using the selected new spreading code, waits for acknowledgment of the beacon from the receiver, and then resumes transmission using the new selected spreading code; and
wherein if packet reception is interrupted or if packets are improperly received, the receiver begins scanning different channels according to the plurality of spreading codes until a beacon from the transmitter is received, and then acknowledges the beacon and resumes receiving data packets using the new selected spreading code.

8. The communications device or system of claim 6 or 7, wherein the first and second processor systems each provide data compression to compress converted digital audio data prior to transmission and further provide data decompression to decompress received digital audio data.

9. The communications device or system of any one of claims 6-8, wherein the second SSERCD further comprises:
an audio interface operative to send and receive analog audio signals to a separate communications device via a cable;
a second PTT button providing a second talk signal to the second processor system when activated by the emergency responder,
a second A/D converter converting an analog audio signal received at the audio interface to digital audio data, wherein the second processor system is operative to packetize the digital audio data from the second A/D converter for transmission to the first SSERCD via the second data modem when neither of the PTT buttons are activated; and
a second conversion circuit converting assembled digital audio data from the
second processor system providing an analog audio signal to the audio interface when the second PTT button is activated.

10. The communications device of any one of claims 1-9, comprising said mask or helmet.

11. A clothing or uniform mounted spread spectrum emergency responder communications device (SSERCD) for emergency responder voice communications, comprising:
an audio interface operative to send and receive analog audio signals to a
separate communications device via a cable;
a first push-to-talk (PTT) button providing a first talk signal when activated by
the emergency responder;
a second PTT button providing a second talk signal to the processor system
when activated by the emergency responder,
a near field spread spectrum data modem operative according to at least one
spreading code to modulate and transmit digital audio data packets and to
receive and demodulate digital audio data packets;
a processor system operatively coupled with the first PTT button to receive
the first talk signal and with the data modem to packetize the digital audio
data for transmission by the data modem and to assemble digital audio data
packets received by the data modem, the processor system operative to packetize and transmit assembled digital audio data packets to a near field
spread spectrum data modem not associated with the emergency responder
via the data modem when the first PTT button is activated.
an A/D converter converting an analog audio signal received at the audio interface to digital audio data, wherein the processor system is operative to packetize the digital audio data from the A/D converter for transmission via the data modem when neither of the PTT buttons are activated; and
a conversion circuit converting assembled digital audio data from the processor system providing an analog audio signal to the audio interface when the second PTT button is activated.

12. The communications device of claim 11, further comprising:
a microphone operative to receive an audible input and to provide an analog audio signal to the A/D converter for transmission via the data modem; and
a speaker operative to receive the analog audio signal from the conversion circuit and to provide an audible output.

13. The communications device or system of any one of claims 1 to 12, wherein each of the at least one conversion circuit comprises:
a PWM circuit that pulse width modulates the assembled digital audio data;
a filter circuit that filters the pulse width modulated audio data; and
an amplifier circuit that amplifies the filtered audio data to provide an analog audio signal.

14. The communications device or system of any one of claims 1 to 13, wherein each of the at least one processor system provides data compression to compress converted digital audio data prior to transmission and further provides data decompression to decompress received digital audio data.

15. The communications device or system of any one of claims 10 to 14, wherein the processor system implements spread spectrum channel hopping to coordinate the transfer of data packets to and from the data modem according to a selected one of a plurality of spreading codes, each spreading code defining a unique set of frequency channels through which data packets are transferred, and wherein the processor system switches to a new selected spreading code when a transmission problem is detected.
